# EUROPEAN PATENT SPECIFICATION

(11) **EP 4 290 183 B1**
(45) Date of publication and mention of the grant of the patent: **30.07.2025**
(21) Application number: 23174065.5
(22) Date of filing: 17.05.2023
(51) Int. Cl.: G01C 21/34, G05D 1/00, G08G 1/00, G06Q 10/02, G06Q 10/047, G06Q 10/063, G06Q 30/0645, G06Q 50/40

(54) **OPERATION SYSTEM FOR ELECTRIC PERSONAL MOBILITY VEHICLES**
BETRIEBSSYSTEM FÜR ELEKTROMOBILE
SYSTÈME DE FONCTIONNEMENT POUR VÉHICULES DE MOBILITÉ PERSONNELLE

(30) Priority: 01.06.2022 JP 2022089745
(43) Date of publication of application: 13.12.2023
(73) Proprietor: Suzuki Motor Corporation, Hamamatsu-shi, Shizuoka 432-8611 (JP)
(72) Inventor: SHIBATA, Kengo, Hamamatsu-shi, 432-8611 (JP)
(74) Representative: Plasseraud IP

(56) References cited:
- EP-A1- 3 848 674
- US-A1- 2014 358 353
- US-A1- 2015 199 619
- US-A1- 2017 266 069
- US-A1- 2022 005 358

## Description

### [Technical Field]

The present invention relates to a small electric vehicle that is permitted to travel on sidewalks, and to an operation system for a small electric vehicle including a self-driving mode and a manual driving mode.

### [Background Art]

Small electric vehicles (personal mobility vehicles) such as mobility scooters and electric wheelchairs are treated as pedestrians under the law if they satisfy regulations for speed, vehicle body size, and the like, and travel in pedestrian traffic zones such as sidewalks and roadside strips instead of roadways. For such small electric vehicles, in addition to manual driving according to operations by an occupant, investigation is underway to enable self-driving, in which the vehicle follows a predetermined route using sensor information, map information, and location information obtained by positioning means (see, Patent Literature 1, for example). Patent Literature 2 discloses an operation system for autonomous personal mobility vehicles that may pick up a passenger and self-drive to a target location. Patent Literature 3, 4, 5 and 6 disclose other known operation systems for autonomous vehicles.

### [Citation List]

### [Patent Literature]

[Patent Literature 1] JP 2019-215699 A
[Patent Literature 2] US 2022/005358 A1
[Patent Literature 3] US 2014/358353 A1
[Patent Literature 4] US 2017/266069 A1
[Patent Literature 5] US 2015/199619 A1
[Patent Literature 6] EP 3 848 674 A1

### [Summary of Invention]

### [Problems to be Solved by the Invention]

By including a self-driving function in a small electric vehicle that is permitted to travel on sidewalks, not only autonomous driving by manned self-driving but also dispatching and returning (retrieving) by unmanned self-driving are possible, which are expected to be used for automatic transportation services and the like. However, unlike the case of ordinary vehicles that travel on roadways with a standardized road structure, various challenges exist in relation to enabling self-driving for the case of small electric vehicles that travel on sidewalks.

For example, in the case of ordinary vehicles, the travel lane of the road is fixed regardless of self-driving or manual driving, and thus, in the case of providing an automatic transportation service, the route is simply planned so that the pick-up/drop-off position for passengers is at the edge of the road on the travel lane (left lane) side. However, in the case of a sidewalk-traveling vehicle like an electric wheelchair, manual driving enables the occupant to select whether to travel on the sidewalk adjacent to the left side or the right side of the road. In addition, while traveling on the right side of the road is recommended for roads without a sidewalk, there are no laws prohibiting this.

However, when providing an automatic transportation service using an electric wheelchair, the obligation and responsibility for travel lies with the service provider, who is required to comply with the mobility regulations in (1) through (4) below.
(1) For roads with a sidewalk, travel on the sidewalk (reversing is discouraged)
(2) For roads with a roadside strip but no sidewalk, travel on the right-hand roadside strip (reversing prohibited)
(3) For roads without a sidewalk or a roadside strip, travel on the right edge of the road (reversing prohibited/U-turn to the left-edge side discouraged)
(4) When turning right or left at an intersection connecting to a narrower route, space and turnaround time for turnaround are required (turnarounds on narrow roads that require so much time that they would impede the flow of other traffic are discouraged).

Also, in the case of unmanned self-driving, the treatment is similar to an automated delivery robot for the delivery and pickup of goods, and the vehicle is considered to be a sidewalk-traveling vehicle similar to an electric wheelchair robot, subject to the condition of being remotely monitored. However, considering the impact on the movement of surrounding pedestrians and the like, actions which are discouraged in manned driving, such as reversing on sidewalks, are difficult to implement from the standpoint of providing an automatic transportation service.

Consequently, when dealing with navigation for self-driving wheelchairs, issues like the following need to be addressed, and it is difficult to propose an optimal mobility service using conventional route planning and navigation methods that assume a conventional motor vehicle or a manually driven electric wheelchair.
(a) There is a need to consider a space for passing by other pedestrians and the like.
(b) There is a need to consider a space for passing by bicycles and the like.
(c) To pick up users waiting to be picked up on the left side of the road, a circle-around or detour of the route via both sides of the sidewalk adjacent to the left and right edges of the road is required.
(d) When the destination point is on the left side of the road, including transfers to buses and other vehicles (such as bus stops and taxi waiting areas), a circle-around or detour of the route via both sides of the sidewalk is required.

In particular, if a route is generated as-is in response to (c) and (d) above, there is a concern that the user will feel uncomfortable from incorrectly thinking that the self-driving wheelchair, which is circling around or taking a detour in the travel segment, will pass by the destination point without noticing, or that the user (occupant) will cancel self-driving unexpectedly or drop-off unexpectedly and abandon the electric wheelchair.

Accordingly, investigation is underway to make it possible to increase the selection possibilities for traffic patterns and avoid circling around and the like by generating a route using, in combination, dispatching by unmanned self-driving, manned self-driving, and manual driving by the user. However, in actual operation, it must be assumed that unmanned driving or manned driving may become impossible to continue for some reason. In such cases, retrieval needs to be performed rapidly and reliably to prevent an unmanned vehicle from being left unattended in a place that would obstruct traffic flow.

The present invention has been devised in the light of the above points, and an object thereof is to provide an operation system for a small electric vehicle that can execute vehicle retrieval rapidly and reliably in cases in which unmanned driving or manned driving can no longer continue due to unforeseen circumstances.

### [Means for Solving the Problems]

To solve the above problems, the present invention is an operation system for an electric personal mobility vehicle as defined in the independent claim 1.

### [Advantageous Effects of Invention]

As above, the operation system for a small electric vehicle according to the present invention includes a function that gives notice to the operator of the operation server if route deviation or an immobile state lasting a predetermined length of time is detected during unmanned driving or manned driving, thereby enabling the operator to immediately understand that a problem with the vehicle has occurred and to move the vehicle under remote control or arrange for retrieval, as necessary, which can prevent a situation in which the vehicle would be left unattended in an inappropriate place such as partway up a hill or in the middle of an intersection. In particular, this configuration is advantageous in the case in which a single operator monitors multiple vehicles.

### [Brief Description of Drawings]

[Figure 1] Figure 1 is a block diagram illustrating an operation system for a small electric vehicle.
[Figure 2] Figure 2 is a block diagram illustrating a control system of the small electric vehicle.
[Figure 3] Figure 3 is a schematic diagram for explaining a basic concept of a route search.
[Figure 4] Figure 4 is a flowchart illustrating a flow of route generation and mobility plan presentation in the operation system for a small electric vehicle according to the embodiment of the present invention.
[Figure 5] Figure 5 is a flowchart illustrating a flow of dispatching and route traveling in the operation system for a small electric vehicle according to the embodiment of the present invention.
[Figure 6] Figure 6 is a flowchart illustrating a flow of monitoring during actual travel and retrieval support in a case of insufficient battery power in the operation system for a small electric vehicle according to the embodiment of the present invention.
[Figure 7] Figure 7 is a map in which nodes and links have been set in a traffic zone of the small electric vehicle.
[Figure 8] Figure 8 is a map to which nodes for a departure point, a pick-up point, and a drop-off point have been added.
[Figure 9] Figure 9 is a map displaying base routes generated on the assumption of self-driving only.
[Figure 10] Figure 10 is a map displaying an alternative route including manual driving switchover.
[Figure 11] Figure 11 is a map displaying an alternative route including manual driving switchover and pick-up point change.
[Figure 12] Figure 12 is a map displaying an alternative route including a change considering infrastructure information.
[Figure 13] Figure 13 is a map displaying an alternative retrieval route by a retrieval support function.

### [Mode for Carrying Out the Invention]

Hereinafter, an embodiment of the present invention will be described in detail and with reference to the drawings.

### 1. Basic configuration of system

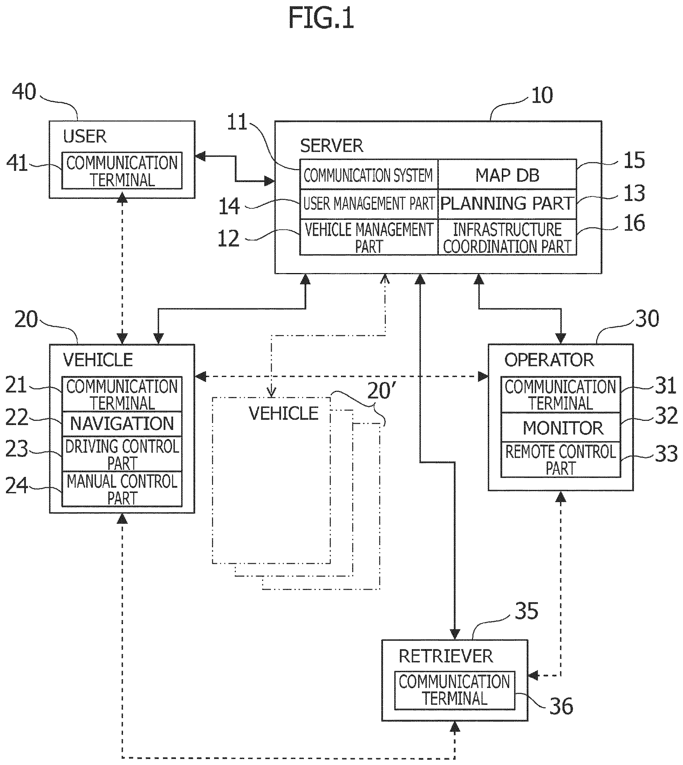

In Figure 1, an operation system for a small electric vehicle according to the embodiment of the present invention includes at least one small electric vehicle 20 (hereinafter also simply referred to as a vehicle 20 in some cases), an operation server 10 for managing and operating the vehicle 20, an operator 30 (operator interface), and at least one user 40 (user communication terminal 41; client). In the following description, a case in which one of each exists is described for convenience, but in actual operations, it is anticipated that a large number of small electric vehicles 20 (20') will be registered in the operation server 10 and, although fewer in number, a plurality of operators 30 and a plurality of user terminals 40 will simultaneously connect to the operation server 10.

The operation server 10 is provided with a communication system 11, a vehicle management part 12, a user management part 14, a planning part 13, a map database 15, and an infrastructure coordination part 16, and is configured by hardware including at least one computer and software running on the computer.

The communication system 11 is implemented as a fixed communication terminal permanently connected to a communication network provided by a telecommunications carrier, enabling the client (user terminal 41) to connect to the operation server 10 over the Internet and/or a mobile communication network and utilize a service through data communication, and also enabling the operation server 10 to connect to a communication terminal 21 of the vehicle 20 over the Internet and a mobile communication network, and remotely manage and operate the system of the vehicle 20.

The vehicle management part 12 is a database with which the operation server 10 manages the registered small electric vehicle 20 (20'), individually stores information groups such as an ID of the vehicle, model information, registered station, status (such as standing by on full charge, preparing to dispatch, be dispatched, self-driving, manual driving, returning, waiting for retrieval, retrieving, and charging), battery power (SOC), battery state of health (SOH), using user ID, presented plan (travel route) information, and operation history, and is provided to enable efficient management and operation of each vehicle 20 (20') by the operation server 10.

In particular, when the vehicle 20 travels on a route by unmanned driving and manned driving, the vehicle management part 12 monitors
(1) whether the vehicle 20 remains located on the route, and
(2) if the vehicle 20 stops, whether the duration of the stop is within a predetermined length of time.
This point will be described later.

The user management part 14 is a database for managing a user who connects to and is registered with the operation server 10 (registered user; hereinafter, unless specifically noted otherwise, a user denotes such a registered user), individually stores information groups such as a user ID, authentication information, registered terminal information, reservation information, usage information, and a usage history, and is to enable efficient management and operation by the operation server 10.

The map database 15 (map system) has a layered structure consisting of: road map data for display, which is a general road map with expanded data relating to pedestrian traffic zones such as sidewalks, roadside strips, crosswalks, and entrances and exits of parks and facilities; text data corresponding to names and the like on the map; and map data for route search which corresponds to a geometric route structure, with the data in each layer being specified by and associated with location information (latitude and longitude coordinates). The road map data for display provides a map display to a display screen of the operation server 10, on which text data is overlaid onto the map display depending on the zoom level. The text data is also used for text search.

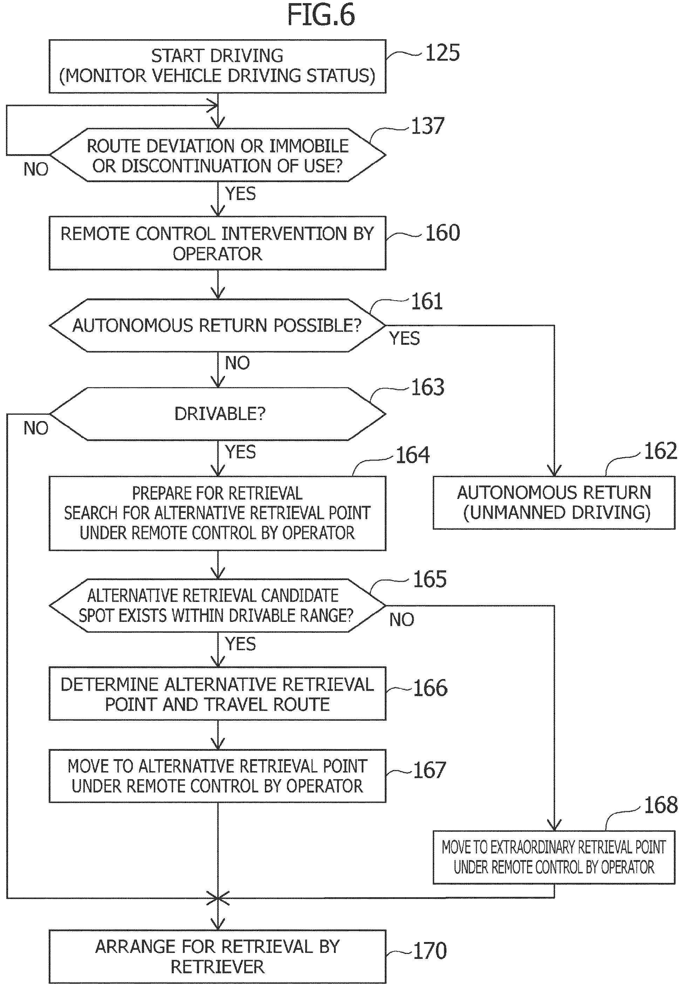

As illustrated in Figure 6, for example, the map data for route search includes nodes (for example, 60a, 61a, 60b, 61b, and so on) set at traffic turning points such as intersections (junctions to crosswalks), bend points, railroad crossings, facility locations (entrances and exits) connected by sidewalks and roadside strips designated as pedestrian traffic zones, and links (for example, La, Lb, and so on) set for each driving style allowed in the traffic zones connecting adjacent nodes, with each link being set as vector data for which orientation is uniquely determined by an initial point node and an final point node. Consequently, for a sidewalk (for example, 50a) allowing for travel in both the forward and backward directions during manual driving or the like, two links (La, Lb) are set in the forward and backward directions, respectively, On the other hand, for a roadside strip (for example, 50b), basically only a link (La) in the forward direction is set.

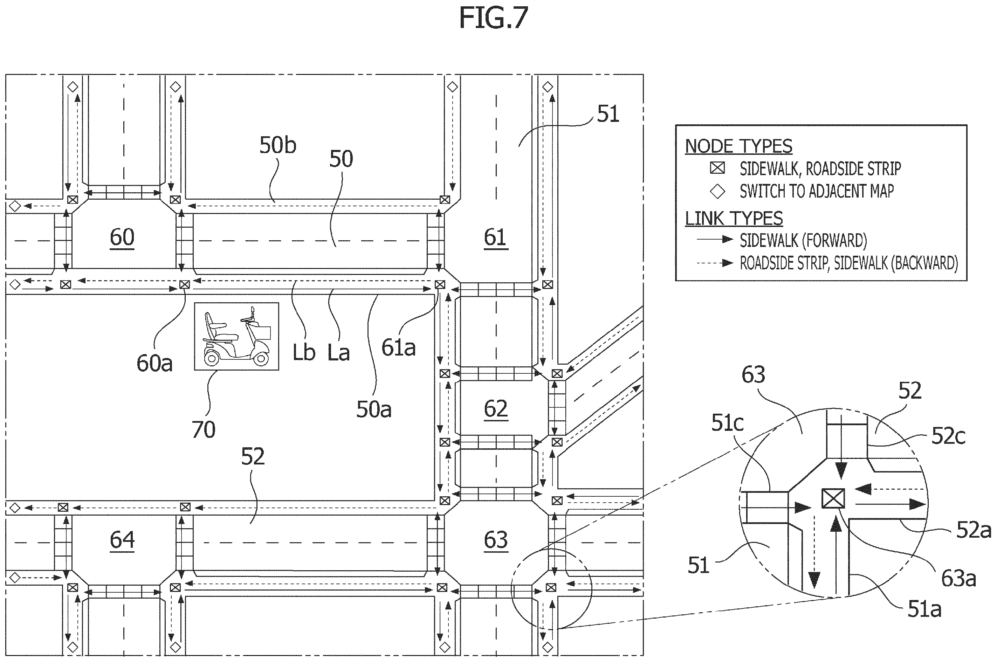

For example, as illustrated by the enlarged view of the area around a corner of the intersection 63 in Figure 6, the links in both the forward and backward directions of sidewalks 51a and 52a attached to the roads 51 and 52, respectively, and the links of crosswalks 51c and 52c crossing the roads 51 and 52, respectively, are connected to a node 63a in a corner of the intersection 63. Note that in Figure 6 and in Figures 7 to 11, described later, the roads are denoted by the reference numerals 50 to 56 while the intersections are denoted by the reference numerals 60 to 67.

Furthermore, a travel cost depending on the route length and a secondary travel cost depending on factors such as the road grade, width, and surface condition are set for each link, a secondary travel cost (penalty score) depending on the link connection angle and width (space) is set for each node, and route search is executed on the basis of these costs.

The planning part 13 (route generation part) is provided with a search algorithm that searches, on the basis of dynamically set nodes such as a departure point (pick-up point) and a destination (drop-off point) input into the display screen or the like of the operation server 10, for an optimal route from among a large number of travel routes connecting the nodes, performs a route display corresponding to the optimal route (and alternative routes) returned by the search, and also has functions for registering a confirmed route (travel plan) selected by the user 40 in the user management part 14 and registering the confirmed route in the vehicle 20 to be dispatched.

The infrastructure coordination part 16 acquires external information distributed by external organizations, such as road control information (traffic congestion, accidents, road closures, and the like), weather information (rainfall, snowfall, wind speed, and the like), and environmental information (smog, pollution) through the communication system 11 and maintains and updates the external information over its validity period so that the planning part 13 can refer to the information for route search.

The operation server 10 is provided with, separately from an input-output device for the setup and operation/management thereof, a monitor 32 and a remote control part 33 enabling the operator 30 to perform remote monitoring and remote control of the small electric vehicle 20. These are installed as an operator interface in a control seat of the operator 30, for example, and in such a control seat, a communication terminal 31 enabling the operator 30 to communicate with the communication terminal 21 of the subject vehicle 20 and the communication terminal 41 of the user 40 through the communication system 11 is also installed.

On the monitor 32, various setting information for the operation server 10, registration information pertaining to the vehicle management part 12 and the user management part 14, external information acquired by the infrastructure coordination part 16, and the like can be displayed in response to operations by the operator 30. Additionally, on the monitor 32, a map provided by the map database 15, a route generated in the planning part 13, particularly the confirmed route (including a dispatch route and a return route described later) and navigation registered in the user management part 14 and the vehicle 20 to be dispatched can be displayed, and an image (video) from a camera (external sensor 26) of the subject vehicle 20 can also be displayed. With this arrangement, the operator 30 can remotely control the subject vehicle 20 with the remote control part 33 while checking on the monitor 32 a forward video (and a surrounding video) while the subject vehicle 20 is traveling.

The user communication terminal 41 of the user 40 may also be a fixed terminal used when renting or ordering the small electric vehicle 20, but for the purposes of dispatch guidance and authentication of the subject vehicle 20, is preferably a mobile terminal that can be carried when using the subject vehicle 20. Note that the small electric vehicle 20 is also provided with an in-vehicle speaker and pickup microphone connected to the communication terminal 21 to enable voice calls with the operator 30 during manual driving and the like, and by providing a passcode input device (such as a keypad), authentication of the subject vehicle 20 is possible, although a mobile terminal is necessary for guidance prior to dispatch.

### 2. Basic configuration of small electric vehicle

The small electric vehicle 20 is configured as a personal mobility vehicle (sidewalk-traveling vehicle) such as a mobility scooter or an electric wheelchair, in which a vehicle body is provided with a seat and a plurality of wheels, including drive wheels, and is provided with a manual control part 24 enabling manual driving by the user 40 (occupant) in a seated state and a drive unit 27 for driving the drive wheels.

For the manual control part 24, a joystick type that can be disabled easily during self-driving is suitable, but a handle type is also possible. In the case in which a handle-type steering control part is provided, in addition to the need for a steer-by-wire steering system, the handle itself is preferably retracted, folded, or covered by a cowling to make it difficult to be grasped by other pedestrians or the like.

The drive unit 27 can be configured as an electric wheelchair type, in which the driven wheels are provided as freewheels (omni-directional wheels) and the left and right drive wheels are driven separately by left and right motors such that forward and backward movement and left and right turning can be performed by controlling the left and right motors, but can also be configured as a mobility scooter type, in which the left and right drive wheels are driven by a single motor and the driven wheels are steered by an electric power steering apparatus. Although not particularly limited, the former is more consistent with a joystick-type manual control part, whereas the latter is more consistent with a handle-type manual control part.

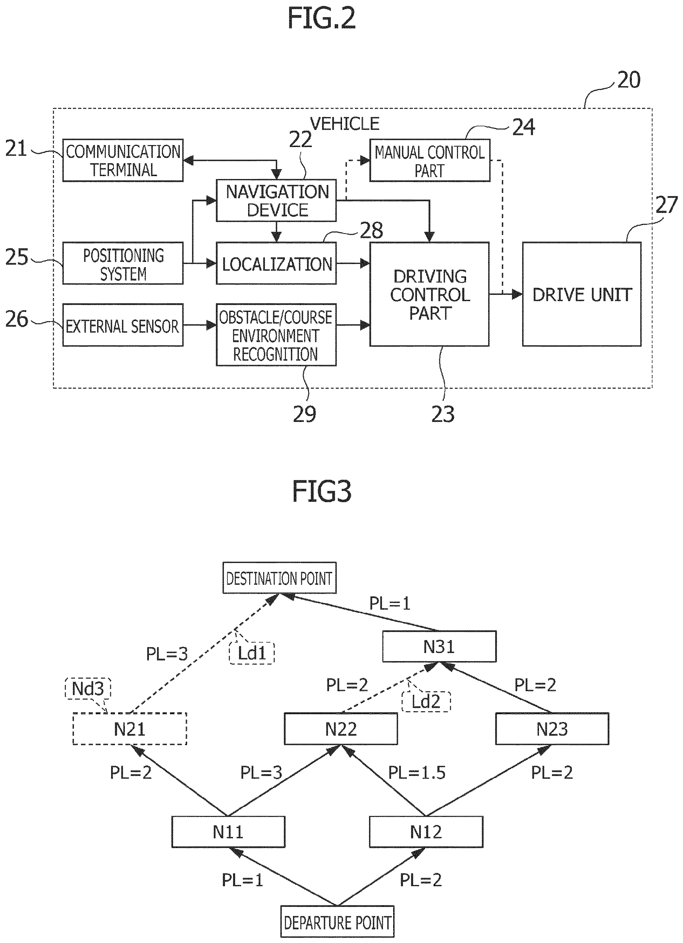

In addition to the manual driving mode in which the small electric vehicle 20 travels under user control, to enable operation in the self-driving mode for traveling autonomously in accordance with a predetermined route under remote monitoring, as illustrated in Figure 2, the small electric vehicle 20 includes a communication terminal 21 for mobile data communication and connection with the operation server 10 through the communication system 11, a navigation device 22 for route guidance, a driving control part 23 that controls the drive unit 27 according to the route guidance, a positioning system 25, and an external sensor 26.

For the positioning system 25, it is suitable to provide a global navigation satellite system (GNSS) receiver for receiving GNSS signals and acquiring the absolute location of the vehicle through positioning calculations, a magnetic sensor for measuring the geomagnetic field and acquiring the heading of the vehicle, and an inertial sensor for detecting the attitude, or in other words the three-dimensional inclination, of the vehicle, thereby enabling localization 28 of the vehicle and route guidance by the navigation device 22.

For the external sensor 26, it is suitable to provide cameras for imaging in front and around (the rear and sides) of the vehicle, and a LiDAR (laser scanner) for recognizing course structures and obstacles in front of the vehicle, whereby the combination of this detection information enables course environment recognition and obstacle recognition for autonomous driving.

For example, road surface markings such as white lines (lane markings) and crosswalks are recognized from a camera image, course structures of sidewalks and roadside strips are recognized from LiDAR 3D point cloud data, and by combining this recognition information, the course of the small electric vehicle 20 and its position in the lateral direction on the course are specified. Traffic signals and road traffic signs are also recognized from the camera image and used for driving control. Note that, as described already, the camera image (video) is transmitted to the operation server 10 through the communication terminal 21 and used for remote monitoring and remote control by the operator 30.

The driving control part 23 recognizes the course environment and driving status of the vehicle 20 on the basis of the above-described localization 28 by the positioning system 25, the route provided by the navigation device 22, and obstacle and course environment recognition 29 based on detection information from the external sensor 26, and at the same time predicts the movement of nearby mobile objects and controls the drive unit 27 to achieve autonomous driving by decelerating or stopping to avoid interference if there is a possibility of interference. Also, if an obstacle consisting of a non-mobile object on the course is detected, a local route for avoiding the obstacle is generated, and steering avoidance is executed.

The small electric vehicle 20 is provided with: a battery (secondary battery) that supplies power for driving to the drive unit 27 and low-voltage operating power to a control system, which includes the navigation system 22 and the driving control part 23; and a battery management unit (BMU) for monitoring the input-output current, total voltage, and remaining capacity of the battery and for managing the status of the battery. The BMU has a function for calculating the remaining capacity (SOC) on the basis of the integral of the input-output current (cumulative power consumption).

### 3. Route search

When performing a route search in the planning part 13, reference points for the following four locations are set as dynamic nodes on the basis of input information from the user 40 connected to the operation server 10.
(1) A pick-up point designated by the user
(2) A drop-off point (destination point) designated by the user
(3) A vehicle station (departure point) designated on the basis of the pick-up point
(4) A vehicle station (if different from the departure point) designated on the basis of the drop-off point

Of these, if (1) and (2) are not selected from among existing nodes on the road map data, nodes are added on links that pass through or are adjacent to the designated points.

A travel cost (L1) depending on the route length and a secondary travel cost (L2) depending on factors such as the road grade, width, and surface condition are set for each link, and a secondary travel cost (penalty score) depending on the width or space (N1) and the link connection angle (N2) is set for each node, as already described. In a route search, the travel cost (L1) depending on the route length (PL) is the major cost of a route search, whereas the other travel cost (penalty score) is a secondary cost supplement metric that adjusts the main cost in an increasing direction. More practical travel routes can be derived by combining known route search methods (such as the A* algorithm and Dijkstra's algorithm) with "main cost (L1) adjustment by a cost supplement metric (L2, N1, N2)" to find an optimal route with the lowest total cost.

For example, in Figure 3, if a search for a travel route is performed using the travel cost (L1) depending on the route length PL (travel distance) of each link, the route passing through the nodes N11 and N21 has the shortest total route length, and the route passing through the nodes N11 and N21 is the optimal route.

However, if there exists an element (L2) indicating the load actually incurred during travel besides the cost (L1; route length, travel time) associated with the travel itself, the element is incorporated into the link as a cost supplement metric and the travel cost is adjusted. The cost supplement metric (L2) may also include a temporary cost (penalty score) acquired by the infrastructure coordination part 16, such as traffic congestion information and road maintenance information other than the above.

For example, if road maintenance information (Ld1) and traffic congestion information (Ld2) exist on the two links indicated by the dashed lines in Figure 3, the travel costs (PL=3, PL=2) for these links are adjusted by the temporary travel costs (Ld1, Ld2), respectively. For example, if Ld1 and Ld2 are weighted to be 1.5 and 2 times the cost, the route passing through the nodes N12, N23, and N31 has the lowest cost.

Note that, in addition to travel costs such as the width or space (N1) and the link connection angle (N2) for nodes, it is also necessary to recognize traffic signals when passing through intersections and crosswalks, wait for signals as necessary, and pass through at the appropriate time, and travel costs caused by the above are also incurred. In the case of a railroad crossing, a link cost associated with crossing the railroad tracks is also incurred in addition to the cost of recognizing an alarm (warning sound) and the crossing gate.

Moreover, a time-limited cost (penalty score) acquired by the infrastructure coordination part 16 may also be added to a node. For example, if intersection congestion information (Nd3) exists for the node N21 indicated by the dashed line in Figure 3, the travel costs (PL=2, PL=3) for the links connected to the node N21 may also be adjusted by the temporary travel cost (Nd3).

### 4. Operation flow from dispatch request to plan confirmation

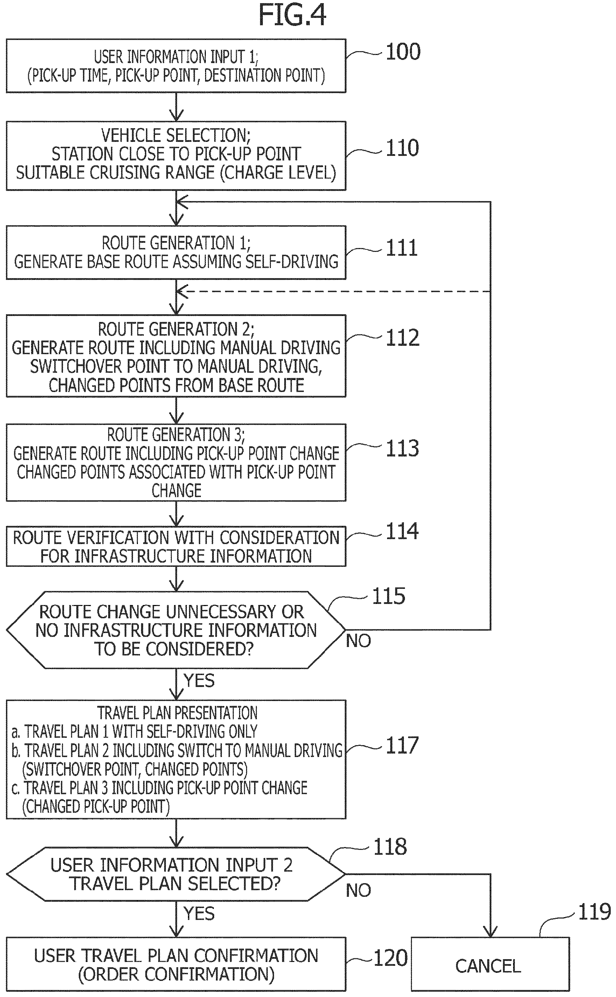

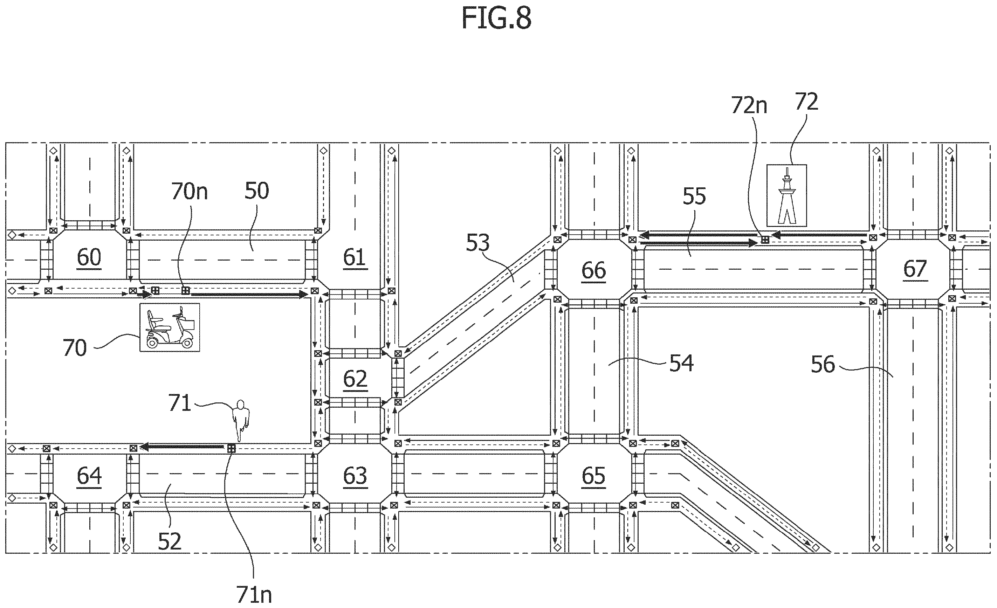

Next, the flow from route generation to travel plan presentation in response to a dispatch request from a user in the operation system according to the present invention will be described with reference to the flowchart in Figure 4 and the maps in Figures 8 to 12.

First, the user 40 desiring to use the small electric vehicle 20 (automatic transportation service) connects to the operation server 10 and inputs reservation information such as the desired use date, desired pick-up time, desired pick-up point, destination point (desired drop-off point), and the like (step 100).

If the input of information by the user 40 is completed, the operation server 10 accesses the vehicle management part 12, compares the desired pick-up point of the user 40 to the status of vehicles 20 registered in a vehicle station 70 located in a service area, and selects a vehicle 20 with compatible status, cruising range (charge level), and the like (step 110).

In addition, as illustrated in Figure 8, the planning part 13 first adds the selected vehicle station 70, the desired pick-up point 71 and destination point (desired drop-off point) 72 of the user 40 as dynamic nodes 70n, 71n, and 72n to the map data for route search. Accordingly, dynamic links (indicated by thick arrows in Figure 8) starting or ending at these nodes 70n, 71n, and 72n are also added to the data.

Next, in the map data for route search to which dynamic nodes (links) have been added as described above, a search for an optimal route is performed under the assumption that the vehicle will travel from the vehicle station 70 to the desired pick-up point 71 (71n) by unmanned self-driving, travel from the desired pick-up point 71 (71n) to the destination point 72 (72n) by manned self-driving, and then return from the destination point (desired drop-off point) 72 (72n) to the vehicle station 70 by unmanned self-driving (step 111).

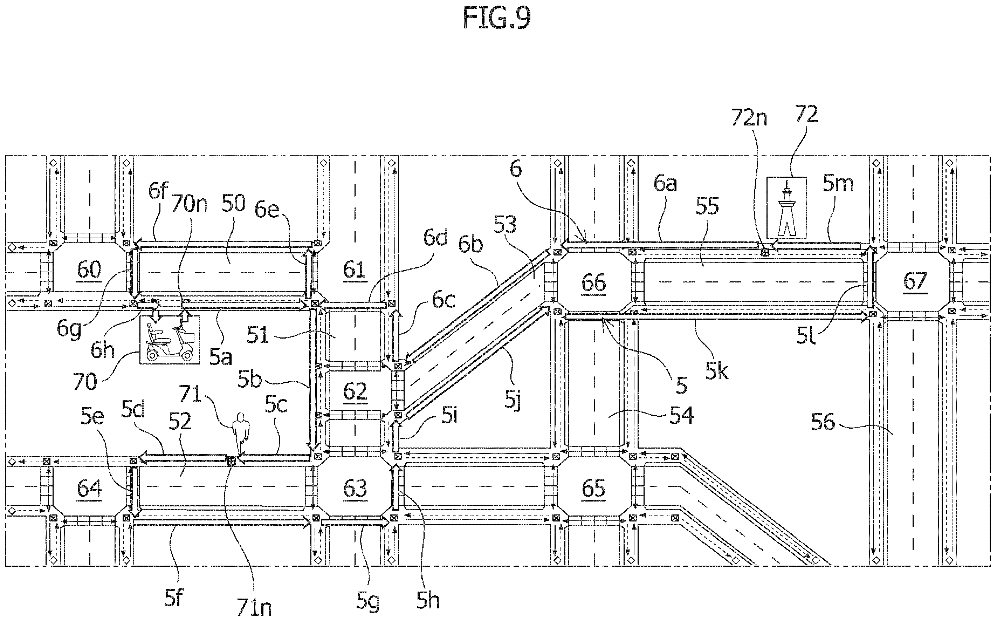

In Figure 9, base routes (5, 6) generated under the assumption of self-driving as described above are indicated by block arrows. The base routes (5, 6) include a dispatch route (5a to 5c) that travels from the vehicle station 70 to the desired pick-up point 71 by unmanned self-driving, a user travel route (5d to 5m) that travels from the desired pick-up point 71 to the destination point (desired drop-off point) 72 by manned self-driving, and a return route (6; 6a to 6h) that travels from the destination point (desired drop-off point) 72 to the vehicle station 70 by unmanned self-driving.

Next, the planning part 13 executes a search for an optimal route with respect to the user travel route (5d to 5m) with consideration for the case in which the user 40 travels by manual driving (step 112).

As described above, since the base routes (5, 6) assume only self-driving, the links going in the opposite direction on each sidewalk are excluded from the search. However, since manual driving by the user 40 is also possible on the user travel route (5d to 5m), a route search that also includes the links going in the opposite direction on each sidewalk is performed, and there is also a possibility that travel cost will be reduced, such as by the travel route being shortened, as a result of switching from self-driving to manual driving.

For example, the base route 5 illustrated in Figure 9 crosses a road 54 at an intersection 66, travels along the sidewalk (forward-direction link 5k) along a road 55, crosses the road 55 at an intersection 67 (link 51), and travels on the sidewalk (forward-direction link 5f) on the opposite side of the road 55 to reach the entrance (node 72n) of the destination 72.

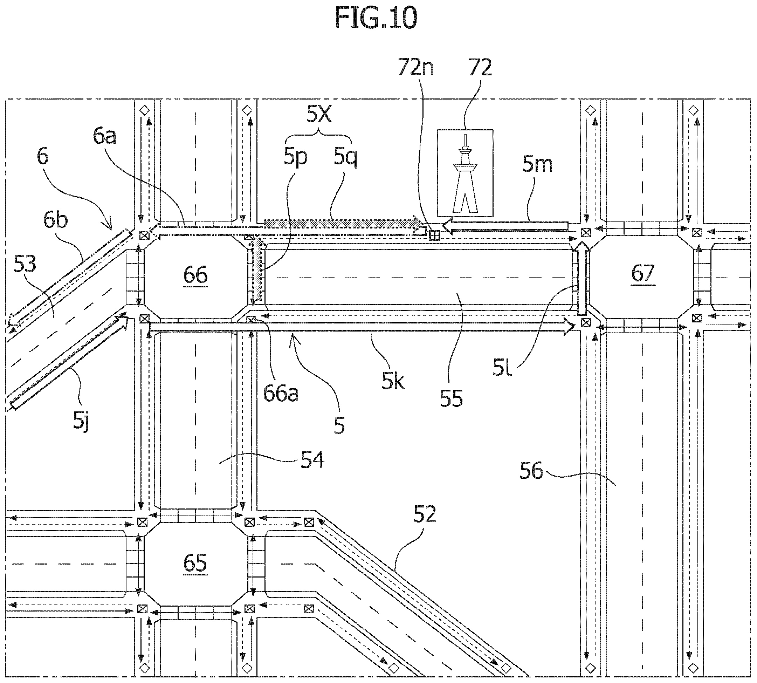

However, if the case of traveling by manual driving is considered, as illustrated in Figure 10 which is an enlarged view of the main portion of Figure 9, the user could switch to manual driving at a point 66a after crossing the road 54 at the intersection 66, cross a crosswalk (link 5p), and drive on the sidewalk (backward-direction link 5q) on the opposite side of the road 55 to reach the entrance (node 72n) of the destination 72.

The user 40 can accept manual driving and change to such an alternative route 5X (5p, 5q) to thereby shorten the route (shorten the time required). Moreover, since there is a possibility that the user may incorrectly think that by traveling on the base route (5k to 5m) prioritizing the forward direction, the vehicle will pass by the destination 72 without noticing, it is preferable to notify the user in advance that a circle-around will occur as described above when presenting the base routes (5, 6) as the optimal route. This arrangement makes it possible to avoid a situation in which the user who did not select the alternative route 5X feels uncomfortable during actual travel or unexpectedly disengages self-driving and drops off.

Next, the minimum of the desired pick-up point 71 (71n) of the user 40 is changed, that is, the unmanned driving segments (dispatch route 5a to 5c) adjacent to the node 71n is changed to 1 or 2 nodes (alternative nodes), and a search for an optimal route is executed (step 113).

The desired pick-up point 71 is designated according to the desires of the user 40, but as a result, there is also a possibility that the point is not an optimal point given the circumstances (such as the location of the vehicle station 70 and the transportation conditions) on the service-providing side, and in some cases, the user 40 may designate a point without a definite reason. Consequently, in some cases, a slight change in the pick-up point may be expected to reduce costs and shorten the route (shorten the time required) by more than the cost of accepting the cost of travel by the user 40 for the change.

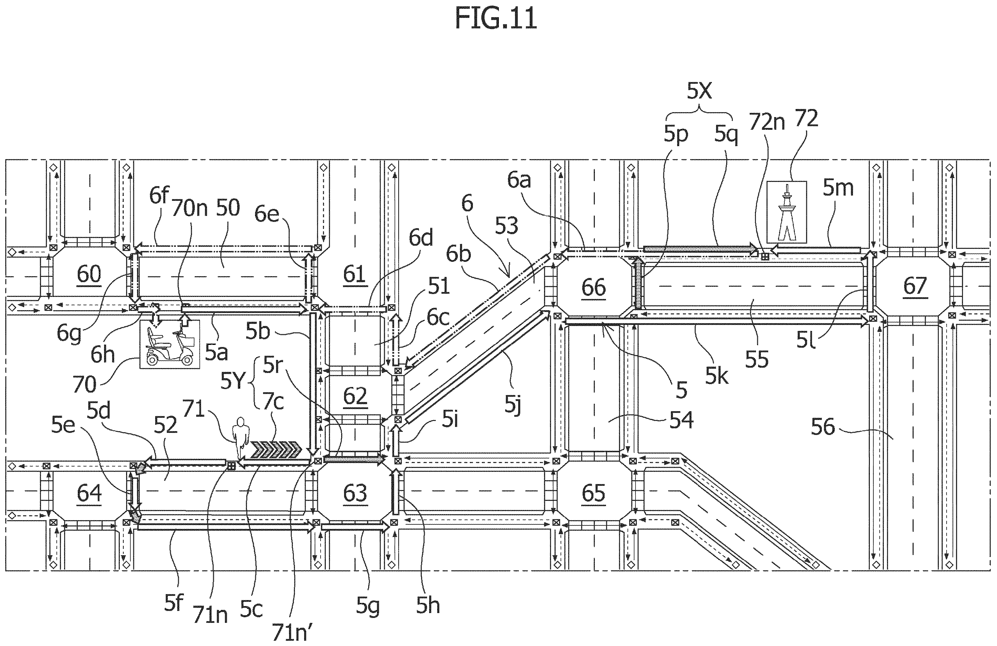

For example, as illustrated in Figure 11, by searching for an optimal route with the node set at the corner of the intersection 63 adjacent to the desired pick-up point 71 (71n) of the user 40 treated as an alternative node 71n' (alternative pick-up point candidate), an alternative route 5Y (5r) that crosses (link 5r) the intersection 63 directly from the point is generated.

The alternative route 5Y requires movement 7c equivalent to one link 5c of the user 40, but having the user 40 accept this cost has the advantage of shaving off the cost of circle-around on a route that travels on the sidewalk (forward-direction link 5d) along the road 52 in the direction away from destination 72, crosses (link 5e) the road 52 at an intersection 64, travels on the sidewalk (forward-direction link 5f) on the opposite side of the road 55, crosses (link 5g) the road 51 at the intersection 63, and crosses (link 5h) the road 52 again, and two road crossings on the base route 5.

Note that it is obvious that additional burdens on the user 40 should be minimized as much as possible, but depending on the status of the dispatch route adjacent to the desired pick-up point, a shorter route (shorter time required) is expected in some cases by further changing the pick-up point.

Accordingly, the travel cost is recorded as a provisional value for the case of treating the first alternative node 71n' described above as a primary alternative node, a search for an optimal route is performed with the secondary alternative node (the node adjacent to the intersection 62) adjacent to the primary alternative node 71n' treated as an alternative pick-up point candidate, and the travel cost in that case is compared to the provisional value of the travel cost associated with the primary alternative node to verify whether further cost reduction is expected. These provisional values preferably also include the travel costs of the user associated with a pick-up point change, so as to avoid over-burdening the user. Additionally, a threshold value may be imposed on the travel distance for the alternative node, and the alternative process may be terminated when the threshold value is exceeded.

For example, in the example illustrated in Figure 10, the primary alternative node 71n' is confirmed because no large cost reduction, such as avoiding a road crossing, is expected from changing from the primary alternative node 71n' to the secondary alternative node (the node adjacent to the intersection 62) compared to the increased burden on the user, or because the travel distance will exceed the threshold value.

As described above, when travel plans (base plan and alternative plans) to be presented to the user 40 have been provisionally confirmed through the generation of the base routes 5 and 6 assuming only self-driving, the generation of the alternative route 5X considering manual driving, and the generation of the alternative route 5Y considering changes of the pick-up point, the planning part 13 references external information (infrastructure information) acquired through the infrastructure coordination part 16 and verifies whether there are any obstacles such as traffic congestion or weather conditions in each provisionally defined route plan (step 114).

If infrastructure information to be considered exists on the base route 5 (step 115; NO), the base routes 5 and 6 are generated again with consideration for the infrastructure information. If infrastructure information to be considered exists only on the alternative route 5X, only the alternative route 5X is generated again, and depending on the circumstances, the presentation of a travel plan is performed without including a presentation of the alternative route.

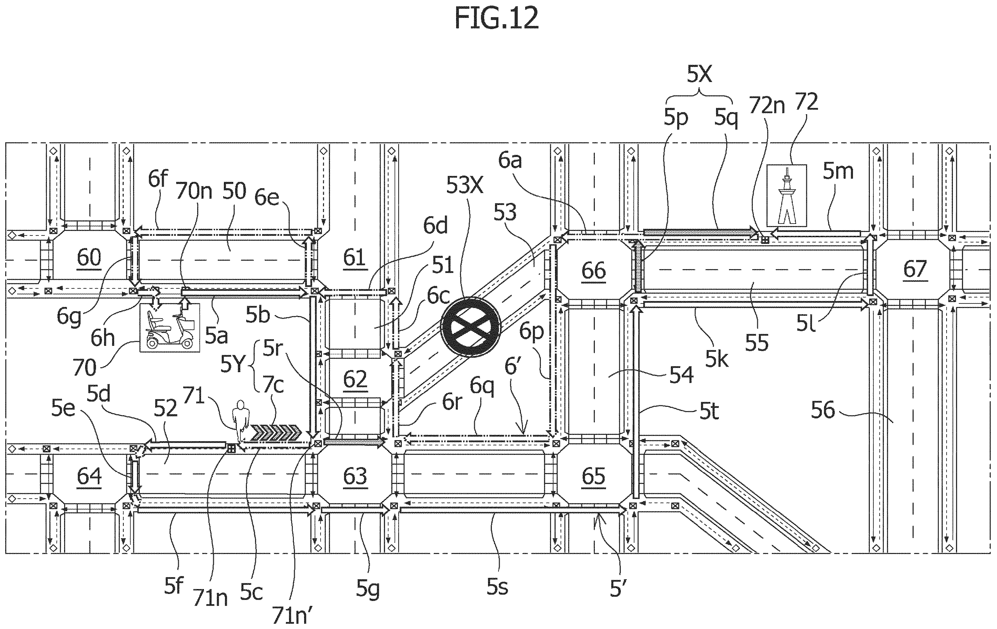

For example, Figure 12 illustrates a case in which, on the day in question, the user 40 has requested a vehicle dispatch from near the pick-up point 71 using a mobile terminal or the like as the user terminal 41, and the generation of a travel plan was executed, but when there is a road closure 53X due to a traffic accident or the like on the road 53, routes 5' and 6' are generated to bypass the road closure 53X through links 5s and 5t and links 6p, 6q, and 6r instead of the base routes 5 and 6.

The case in which infrastructure information to be considered exists only on the base route 6 (return route) is handled by, for instance, comparing the travel cost associated with returning to the vehicle station 70 by the re-generated return route 6' to the travel and retrieval costs to another station or retrieval point. The return routes 6 and 6' are not presented to the user 40, and are displayed only on a management screen of the operator 30 or the like.

If the travel plans (base plan, alternative plans) to be presented are confirmed via verification according to infrastructure information (step 115; YES), the planning part 13 presents the travel plans (base plan, alternative plans) to the user 40 (step 117).

That is, each of the following travel plans is presented to the user:
(a) Travel plan 1 with self-driving only (base route 5)
(b) Travel plan 2 including a switch to manual driving (alternative route 5X; switchover point)
(c) Travel plan 3 including pick-up point change (alternative route 5Y; changed pick-up point)

These travel plans are presented to the user in a state with, for example, the nodes and links and the return routes 6 and 6' hidden from the administrative map (map for route search) illustrated in Figure 11 or Figure 12, with the travel route 5 and the alternative routes 5X and 5Y superimposed onto the road map data for display, and with captions such as estimated time required (estimated arrival time) for each of the travel plans added. The travel plans may also be accompanied by voice guidance.

If the user 40 selects one of the travel plans (step 118; YES), the user travel plan is confirmed, and an order is confirmed on the basis of registration information pertaining to the user 40 (step 120).

On the other hand, if the user 40 does not select any of the travel plans or has performed a cancel operation, the process is canceled (step 119).

### 5. Operation flow from dispatch to route traveling to autonomous return

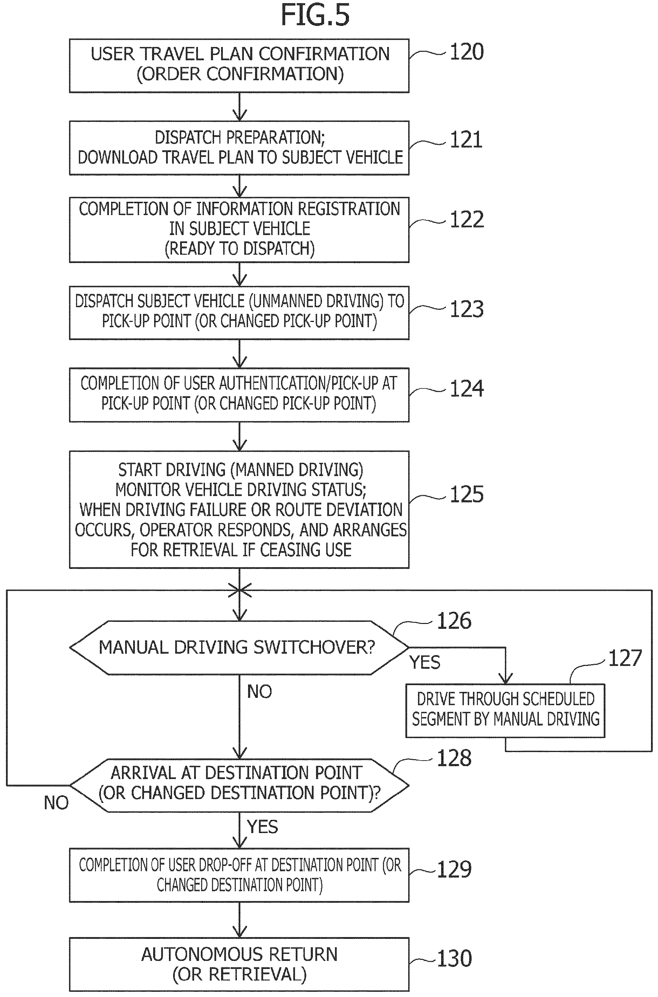

Next, dispatch and route traveling assuming the case in which the user 40 has selected a travel plan including both of the alternative routes 5X and 5Y will be described with reference to the flowchart in Figure 5 and Figure 11.

If the user travel plan is confirmed and an order by the user 40 is confirmed (step 120), the operation server 10 proceeds to dispatch preparation of the small electric vehicle 20 selected for dispatch (hereinafter simply referred to as the subject vehicle 20). First, the operation server 10 performs a download of navigation data pertaining to the confirmed travel plan, user authentication information, and the like to the navigation device 22 of the subject vehicle 20 through the communication system 11 and the communication terminal 21 (step 121).

If the download (information registration) to the subject vehicle 20 is completed and a dispatchable state is achieved, the subject vehicle 20 stands by at the vehicle station 70 until a departure time back-calculated from the pick-up time of the date of use (step 122). Note that in the case of an immediate dispatch request, the subject vehicle 20 departs the vehicle station 70 toward the pick-up point (71n') as soon as the dispatch preparation is completed. In this case, the user 40 is notified of the expected arrival time as the expected pick-up time. Note that although the three travel plans described above are displayed in Figure 11, routes other than the confirmed travel plan are not displayed on the communication terminal 41 of the user 40 (HMI device of the subject vehicle 20).

The subject vehicle 20, under monitoring by the operator 30, travels on the dispatch route (links 5a, 5b) from the vehicle station 70 toward the pick-up point (71n') by unmanned self-driving (step 123). In the case of an immediate dispatch request, the user 40 travels (7c) from the original desired pick-up point (71n) to the changed pick-up point (71n') on foot during this time. Note that the changed pick-up point (71n') in the example illustrated in the drawing is set to a corner of the intersection 63, but since there is a possibility that this location may be crowded with other pedestrians and the like, the subject vehicle 20 stops shortly before the changed pick-up point (71n') and gives notice of its arrival to the user 40 by flashing the blinkers or the like. In addition, the user communication terminal 41 of the user 40 is notified of the arrival of the subject vehicle 20 at the changed pick-up point (71n').

The vehicle 20, having arrived at the changed pick-up point (71n'), enters a state of standing by for authentication by the user 40, and driving functions are locked until an authentication operation is performed by the user 40. If authentication (lock release) by the user 40 is completed, the subject vehicle 20 enters a state of standing by to depart, and if the pick-up of the user 40 onto the subject vehicle 20 is completed (step 124) and the user 40 performs a departure operation such as by operating a start button on the HMI device of the subject vehicle 20 or on the user communication terminal 41, the subject vehicle 20 initiates manned self-driving toward the destination point 72 (step 125).

Immediately after starting off, the subject vehicle 20 changes direction to cross the crosswalk (link 5r) at the intersection 63, checks for a green light to cross the road 51 at the crosswalk (link 5r), travels on the sidewalk (link 5i) along the road 51, and turns right at the corner of the intersection 62 to travel on the roadside strip (link 5j) of the road 53.

During manned driving, too, the driving status (such as driving and stopping, location, and SOC) of the subject vehicle 20 is monitored by the operation server 10 (operator 30) through the communication system 11 (21). The operation server 10 records the driving location and time of the subject vehicle 20 in the vehicle management part 12 (user management part 14). The operator 30 can check the location and status of the subject vehicle 20 through navigation information displayed on the monitor 32, such as a vehicle indicator on a map screen, and can check the status of the subject vehicle 20 and the user 40 through an image from a camera (external sensor 26). With this arrangement, in the event of a driving failure or a significant deviation from the route during travel in the manual driving mode (described later), the operator 30 can communicate with the user 40 through the communication terminal 21 of the subject vehicle 20 or the communication terminal 41 of the user 40, and if necessary, remotely control the subject vehicle 20 with the remote control part 33 while checking a forward video (and a surrounding video) of the subject vehicle 20 on the monitor 32.

If the travel plan includes a switchover to manual driving (step 126; YES, the present example corresponds to this case), at a predetermined timing, such as when the subject vehicle 20 approaches the switchover point (intersection 66) for switching over to manual driving, the user 40 is given advance notice of the imminent arrival at the switchover point for switching over to manual driving from the HMI device of the subject vehicle 20 (or the user communication terminal 41). Thereafter, the subject vehicle 20 stops after crossing the intersection 66, the user 40 is notified of the switchover to the manual driving mode, and the subject vehicle 20 enters a state of standing by for an operation by the user 40.

If the user 40 performs a prescribed operation, such as operating a start button, the manual control part 24 goes into an operable state, the navigation device 22 (or navigation through the user communication terminal 41) is initiated, and driving is switched to the manual driving mode by the user 40 (step 127).

Through manual driving by the user 40, the subject vehicle 20 crosses the road 55 at the crosswalk (link 5p) of the intersection 66, turns right, and travels on the sidewalk (link 5q) along the road 55, thereby arriving at the destination 72 (node 72n) (step 128; YES) and also ending the manual driving mode of the subject vehicle 20, and if the user 40 completes drop-off (step 129), the subject vehicle 20 travels on the return route (6; 6a to 6h) by unmanned self-driving to return to the vehicle station 70 (step 130).

Note that in the time between giving advance notice of approaching the switchover point (intersection 66) for switching over to the manual driving until notifying the user of the switchover to the manual driving mode, or after switching over to the manual driving mode, if the user 40 issues a self-driving request to the operator 30, it is also possible to switch to self-driving under remote control by the operator 30. Also, when presenting the travel plan 2, an option for such self-driving under remote control may also be selectable.

### 6. Monitoring during actual travel and retrieval support in case of immobility

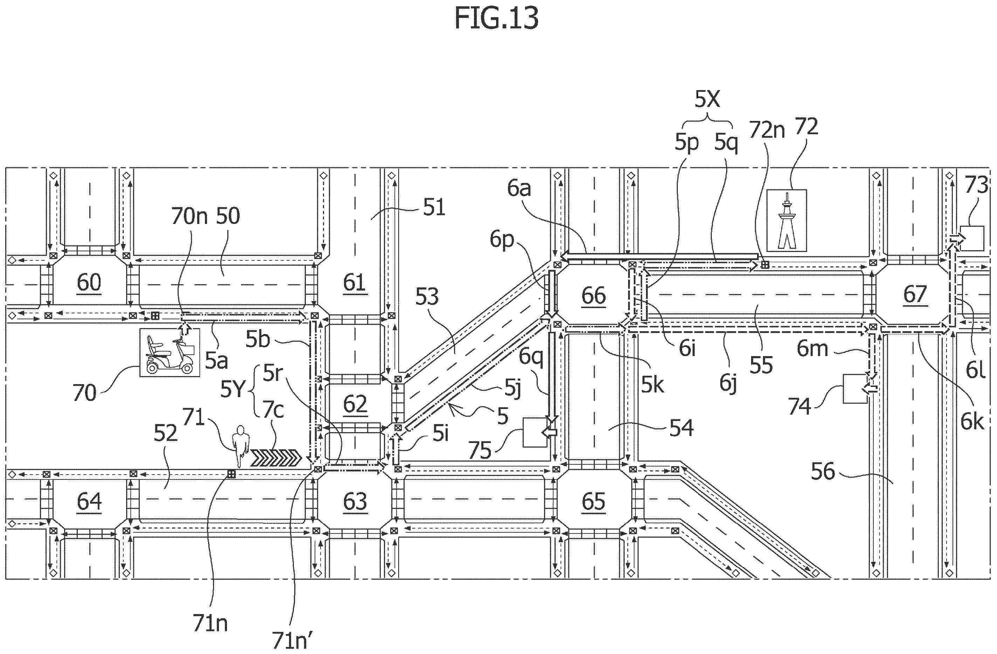

Next, the monitoring of the vehicle driving state during route traveling and the retrieval support function in case of immobility will be described with reference to the flowchart in Figure 6 and Figure 13.

During route traveling on each of the dispatch segment by unmanned driving from the vehicle station 70 to the pick-up point (71n'), the manned driving segment from the pick-up point (71n') to the destination point (72), and additionally the return segment by unmanned driving from the drop-off point (72) to the vehicle station 70, the driving status (such as driving/stopped, location, and SOC) of the subject vehicle 20 is monitored by the operation server 10 through the communication system 11 (21) (step 125).

In particular, during route traveling of the subject vehicle 20, the operation server 10 (vehicle management part 12) continuously monitors
(1) whether the subject vehicle 20 remains located on the route, and
(2) if the subject vehicle 20 stops, whether the duration of the stop is within a predetermined length of time
(step 137).

Specifically, for (1) above, for example, the possibility of route deviation is determined if the discrepancy between the absolute location of the vehicle 20 acquired by the positioning system 25 and the route presented by the navigation device 22 is equal to or greater than a predetermined discrepancy (step 137; YES).

For example, the link that constitutes the route is regarded as the centerline of the target travel route, and the possibility of route deviation is determined if the amount of lateral deviation from the link is equal to or greater than a predetermined amount (for example, equal to or greater than 110 cm with respect to the 70 cm vehicle width requirement for electric wheelchairs and automatic delivery robots that are allowed to travel on sidewalks) for a predetermined time T1 (or a predetermined distance). Cases in which an obstacle avoidance task is occurring are excluded from route deviation. Note that an indication that an avoidance task is occurring may also be displayed.

Also, for (2) above, for example, a count by a timer is started if the speed of the vehicle 20 reaches zero or becomes less than or equal to a speed at which the vehicle is regarded to be substantially stopped, and the possibility of an immobile state is determined if the vehicle remains in the stopped state for a predetermined time T2 (step 137; YES).

For example, since tasks such as waiting for the light to change or waiting for another vehicle to pass occur at intersections, a longer predetermined time T2 (for example, 5 to 10 minutes) may be set to serve as the threshold value for determining an immobile state, but on the other hand, a shorter predetermined time T2 (for example, 3 to 5 minutes) is preferably set so that the immobile state can be handled promptly in the middle part of a link.

If the possibility of route deviation or the possibility of an immobile state is determined for the subject vehicle 20, notice is given to the operator 30 by a method different from the case for normal driving. For example, notice is given to the operator 30 by causing a vehicle indicator on the monitor 32 of the operator 30 to blink or change color, or by producing speech, an alarm, or the like. In this case, the operator 30 intervenes by remote control of the subject vehicle 20 through the communication system 11 as follows (step 160).

First, if manned driving is active, the operator 30 checks the situation with the user 40 through the communication system 11 (communication terminal 21, 31, or 41). Also, if necessary, the operator 30 checks the situation by displaying a camera image from the external sensor 26 of the subject vehicle 20 on the monitor 32. If unmanned driving is active, the operator 30 checks the situation by immediately displaying the camera image on the monitor 32.

In other words, the operator 30 checks under what circumstances the route deviation is occurring (such as being temporary due to traffic flow, obstacle avoidance, or the like; being caused by an obstacle, road structure, or the like; or being forcible movement by a third party due to theft or the like), or under what circumstances the immobility is occurring (such as temporary due to congestion or the like; an inability to move caused by an obstacle, road structure, or the like; a breakdown or accident involving the subject vehicle 20; a temporary halt by the user 40, or a discontinuation of use (abandonment) by the user 40).

If the route deviation or immobility is temporary, the vehicle is returned to route traveling under remote control by the operator 30, and unmanned driving or manned driving is resumed. If the user 40 cannot be contacted despite being in a manned driving segment, a discontinuation of use (abandonment) is determined, and in this case, if the subject vehicle 20 has sufficient battery power (SOC) and is capable of autonomous return to the vehicle station 70 (step 161; YES), the flow proceeds to autonomous return by unmanned driving (step 162).

On the other hand, if an inability to move is determined due to an obstacle or road structure, a breakdown or accident, or the like, or if immobility is determined even though the operator 30 attempts remote control (step 161; NO and step 163; NO), the operator 30 arranges for retrieval by a retriever 35 (step 170).

If autonomous return to the vehicle station 70 is not possible due to insufficient battery power or the like (step 161; NO), but the vehicle is determined to be drivable (step 163; YES), the flow switches to an alternative retrieval point search under remote control by the operator 30 (step 164).

For example, if autonomous return to the vehicle station 70 is determined to be impossible due to insufficient battery power or the like at the time when the user 40 drops the vehicle off at the destination point 72 (72n), a search is performed for an alternative retrieval point existing in the map data for route search within the drivable distance of the subject vehicle 20, with the drop-off point (72n) set as the starting point.

On the administrative map (map for route search) illustrated in Figure 13, if an adjacent vehicle station 73 near the intersection 67, a public space 74, and an empty lot 75 near the intersection 65 are detected as candidate spots for the alternative retrieval point (step 151; YES), the adjacent vehicle station (73) is more preferably set as the alternative retrieval point than the public space 74 and the empty lot 75, as long as sufficient battery power remains.

However, with route generation assuming travel by unmanned self-driving, a retrieval route that proceeds from the starting point 72 to the intersection 66 in the opposite direction from the alternative retrieval point 73, crosses the crosswalk (link 6i), proceeds to the intersection 67 (link 6j) along the road 55, crosses the road 56 (link 6k), and additionally crosses (61) the road 55 is recommended, and thus, it is problematic in that the retrieval route is actually a large circle-around and includes three road crossings. The case of the public space 74 has a lower travel cost than the adjacent vehicle station 73, but is similar in being a large circle-around.

On the other hand, the empty lot 75 has a longer straight-line distance than the adjacent vehicle station 73 and the public space 74, but can be reached by crossing (6a, 6p) the roads 54 and 53 at the intersection 66 and proceeding straight (link 6q) along the road 54, and has a travel cost even lower than the public space 74, and therefore the empty lot 75 is selected as the alternative retrieval point (step 166).

If the alternative retrieval point 75 is confirmed, movement to the alternative retrieval point 75 under remote control by the operator 30 (or unmanned driving) according to route guidance is initiated (step 167). Note that when the alternative retrieval point 75 is confirmed, corresponding location information and the time required is indicated, and therefore the operator 30 transfers this information from the operation server 10 to a communication terminal 36 of the retriever 35 to arrange for retrieval of the subject vehicle 20 (step 170).

Also, in step 165, if a candidate spot for an alternative retrieval point fulfilling the conditions is not detected, the subject vehicle 20 is moved under remote control by the operator 30 and stopped in a place that would not obstruct the flow of traffic, the location is treated as an extraordinary alternative retrieval point (step 168), and the location information is transferred to the retriever 35 to arrange for retrieval.

### 7. Retrieval support function at alternative retrieval point

As above, in the case in which the autonomous return of the subject vehicle 20 to the schedule return spot (vehicle station 70) fails and the retriever 35 retrieves the subject vehicle 20 at an alternative retrieval point, retrieval is also assumed to be burdensome due to reasons such as the retriever 35 not being familiar with the alternative retrieval point or having difficulty in locating the stopped location of subject vehicle 20 at the alternative retrieval point. Accordingly, it is preferable to have an additional retrieval support function for the retriever 35 as follows.
(1) When the subject vehicle 20 has approached to within a predetermined distance to the alternative retrieval point, the operation server 10 is configured to give notice, through the communication system 11, of the approach of the subject vehicle 20 to the alternative retrieval point to the communication terminal 36 of the retriever 35. This is effective in the case in which the retriever 35 has arrived at the alternative retrieval point earlier than the subject vehicle 20, and if the retriever 35 understands that such a notice will come in advance, the retriever 35 can deduce from the lack of the notice that the subject vehicle 20 has not yet arrived. If such a notice is given through vibration, a buzzer, or the like of the communication terminal 36, the retriever 35 can grasp the situation without checking the screen of the communication terminal 36 while on the move, such as while driving.
(2) The operation server 10 has a display function for causing, via the communication system 11, the communication terminal 36 of the retriever 35 to display a camera image or a surrounding image from the subject vehicle 20. Displaying a camera image or surrounding image from the subject vehicle 20 on the communication terminal 36 can help the retriever 35 to grasp the alternative retrieval point by visually checking, in addition to the map information, the scenery around the place where the subject vehicle 20 has stopped.
   However, since displaying a camera image or a surrounding image consumes power, it is preferable to allow this function to be turned off when determined to be unnecessary, or activated to be on after arrival at the alternative retrieval point, on approach to the alternative retrieval point, or giving notice of the current location in the event that the battery power falls to the first threshold value or below.
(3) If the battery power of the subject vehicle 20 falls to or below a second threshold value (for example, 15%) lower than the first threshold value while the subject vehicle 20 is traveling to the alternative retrieval point or after arrival, the operation server 10 is configured to save the above camera image or surrounding image, stop the acquisition of the camera image or surrounding image, and cause the communication terminal 36 of the retriever 35 to display the saved camera image or surrounding image.
(4) The operation server 10 may also have a function for displaying or producing the relative distance between the stopped location of the subject vehicle 20 and the communication terminal 36 of the retriever 35, or a signal corresponding thereto, on the communication terminal 36 of the retriever 35.

For example, besides displaying the relative distance as a numerical value, the emitted light intensity of a light-emitting part such as the screen may be changed progressively (from a weak light to a bright light), the color of the light-emitting part may be changed, or the periodicity of an intermittent signal such as a flash of light or a buzzer may be shortened progressively, according to the relative distance. A signal that changes depending on the relative bearing may also be emitted instead of the relative distance or simultaneously with the relative distance.

There is an advantage in that, even if the alternative retrieval point is a place with poor visibility or is a dark place, or if the retrieval time is after sunset, the retriever 35 can check the change in the signal outputted from the communication terminal 36 to easily determine whether the retriever 35 are approaching or moving away from the subject vehicle 20, making it easy to find the subject vehicle 20 as a result.

Although an embodiment of the present invention has been described above, the present invention is not limited to the above embodiment. The scope of the invention is defined by the appended claims.

### [Reference Signs List]

- 10: Operation server
- 11: Communication system
- 12: Vehicle management part
- 13: Planning part
- 14: User management part
- 15: Map database
- 16: Infrastructure coordination part
- 20: Small electric vehicle (vehicle, subject vehicle)
- 21: Communication terminal
- 22: Navigation device
- 23: Driving control part
- 24: Manual control part
- 25: Positioning system
- 26: External sensor
- 27: Drive unit
- 28: Localization
- 29: Obstacle and course environment recognition
- 30: Operator
- 31: Communication terminal
- 32: Monitor
- 33: Remote control part
- 40: User
- 41: Communication terminal
- 50 to 56: Road
- 60 to 67: Intersection
- 70: Vehicle station
- 71: Desired pick-up point
- 72: Destination point (desired drop-off point)
- 75: Alternative retrieval point

## Claims

1. An operation system for an electric personal mobility vehicle (20), the operation system including:
an operation server (10) connected to a communication system (11) and comprising a map database (15) which includes links set for pedestrian traffic zones including sidewalks; and
an electric personal mobility vehicle (20) which is adapted to connect to the operation server (10) through the communication system (11), and which has a self-driving mode for traveling following a predetermined route and a manual driving mode for traveling under user control,
the operation server (10) comprises:
a route generation part (13) that generates a plurality of travel routes based on the data in the map database (15), in response to a dispatch request from a user communication terminal (41) connected through the communication system (11), the travel routes include a first travel route by unmanned driving from a current location of the vehicle to a pick-up location for a user (40) associated with the user communication terminal (41), a second travel route by manned driving from the pick-up location for the user to a destination location, and a return route by unmanned driving from a drop-off location for the user (40) to a vehicle station; and
a vehicle management part (12) that monitors a location and status of the vehicle (20) through the communication system (11), and
the operation server (10) is configured to perform a download of the travel routes to the user communication terminal (41) via the communication system (11),
**characterized in that**
the operation server has a function that gives notice to an operator (30) of the operation server (10) if the vehicle management part (12) detects that the vehicle (20) deviates from the route or does not move for a predetermined length of time during unmanned driving on the first travel route or the return route, or during manned driving on the second travel route, and
the operation server further has a retrieval support function that, in response to a retrieval request by the operator (30), the route generation part (13) selects a vehicle retrieval point that minimizes a total of travel costs set for each of the links from the current location of the vehicle (20) to the vehicle retrieval point among vehicle retrieval points that the vehicle (20) can be moved to from the current location under remote control by the operator (30), and the operation server (10) guides the operator (30) on a route to the vehicle retrieval point generated by the route generation part (13).

2. The operation system for an electric personal mobility vehicle (20) according to claim 1, wherein the operation server (10) has a function that, in response to a retrieval request by the operator (30), gives notice of the current location of the vehicle or the vehicle retrieval point through the communication system (31) to a communication terminal (41) of a person in charge of retrieval who retrieves the vehicle.

3. The operation system for an electric personal mobility vehicle (20) according to claim 2, wherein the operation server (10) has a display function that causes, through the communication system (31), a camera image or a surrounding image from the vehicle to be displayed on the communication terminal (41) of the person in charge of retrieval.

4. The operation system for an electric personal mobility vehicle (20) according to claim 2, wherein the operation server (10) has a function for displaying a relative distance between a stopped location of the vehicle and the communication terminal (41) of the person in charge of retrieval, or a signal corresponding thereto, on the communication terminal (41) of the person in charge of retrieval.

## Patentansprüche

1. Betriebssystem für ein elektrisches Personen-Mobilitätsfahrzeug (20), wobei das Betriebssystem umfasst:
einen Betriebsserver (10), welcher mit einem Kommunikationssystem (11) verbunden ist und eine Kartendatenbank (15) umfasst, welche Verbindungen umfasst, welche für Fußgängerzonen festgelegt sind, umfassend Gehwege; und
ein elektrisches Personen-Mobilitätsfahrzeug (20), welches dazu angepasst ist, den Betriebsserver (10) durch das Kommunikationssystem (11) zu verbinden, und welches einen autonomen Fahrmodus zum Fortbewegen entlang einer vorbestimmten Route und einen manuellen Fahrmodus zum Fortbewegen unter Nutzersteuerung aufweist,
wobei der Betriebsserver (10) umfasst:
einen Route-Erzeugungsteil (13), welcher als Reaktion auf eine Bereitstellungsanfrage von einem Nutzerkommunikationsendgerät (41), welches durch das Kommunikationssystem (11) verbunden ist, auf Grundlage von Daten in der Kartendatenbank (15) eine Mehrzahl von Fahrrouten erzeugt, wobei die Fahrrouten eine erste Fahrroute durch unbemanntes Fahren von einer gegenwärtigen Position des Fahrzeugs zu einer Abholposition für einen Nutzer (40), welcher mit dem Nutzerkommunikationsendgerät (41) assoziiert ist, eine zweite Fahrroute durch bemanntes Fahren von der Abholposition für den Nutzer (40) zu einer Zielposition und eine Rückkehrroute durch unbemanntes Fahren von einer Rückgabeposition für den Nutzer zu einer Fahrzeugstation umfassen; und
einen Fahrzeug-Verwaltungsteil (12), welcher eine Position und einen Status des Fahrzeugs (20) durch das Kommunikationssystem (11) überwacht, und
wobei der Betriebsserver (10) dazu eingerichtet ist, mittels des Kommunikationssystems (11) ein Herunterladen der Fahrrouten auf das Nutzerkommunikationsendgerät (41) durchzuführen,
**dadurch gekennzeichnet, dass**
der Betriebsserver eine Funktion aufweist, welche einen Operateur (30) des Betriebsservers (10) informiert, falls der Fahrzeug-Verwaltungsteil (12) detektiert, dass das Fahrzeug von der Route abweicht oder sich während eines unbemannten Fahrens auf der ersten Fahrroute oder der Rückkehrroute oder während eines bemannten Fahrens auf der zweiten Fahrroute für einen bestimmten Zeitraum nicht bewegt, und
wobei der Betriebsserver ferner eine Abruf-Unterstützungsfunktion aufweist, dass der Route-Erzeugungsteil (13) als Reaktion auf eine Abrufanfrage durch den Operateur (30) einen Fahrzeug-Abrufpunkt auswählt, welcher Gesamtreisekosten minimiert, welche für jede der Verbindungen von der gegenwärtigen Position des Fahrzeugs (20) zu dem Fahrzeug-Abrufpunkt unter Fahrzeug-Abrufpunkten festgelegt sind, zu welchen das Fahrzeug (20) von der gegenwärtigen Position durch Fernsteuerung durch den Operateur (30) bewegt werden kann, und wobei der Betriebsserver (10) den Operateur (30) auf einer Route zu dem Abrufpunkt führt, welcher durch den Route-Erzeugungsteil (13) erzeugt wird.

2. Betriebssystem für ein elektrisches Personen-Mobilitätsfahrzeug (20) nach Anspruch 1, wobei der Betriebsserver (10) eine Funktion aufweist, dass als Reaktion auf eine Abrufanfrage durch den Operateur (30) eine Benachrichtigung über die gegenwärtige Position des Fahrzeugs oder des Fahrzeug-Abrufpunkts durch das Kommunikationssystem (31) an ein Kommunikationsendgerät (41) einer Person ausgegeben wird, welche für einen Abruf verantwortlich ist und welche das Fahrzeug abruft.

3. Betriebssystem für ein elektrisches Personen-Mobilitätsfahrzeug (20) nach Anspruch 2, wobei der Betriebsserver (10) eine Anzeigefunktion aufweist, welche ein Anzeigen eines Kamerabildes oder eines Umgebungsbildes von dem Fahrzeug an dem Kommunikationsendgerät (41) der Person, welche für einen Abruf verantwortlich ist, durch das Kommunikationssystem (31) bewirkt.

4. Betriebssystem für ein elektrisches Personen-Mobilitätsfahrzeug (20) nach Anspruch 2, wobei der Betriebsserver (10) eine Funktion zum Anzeigen einer relativen Distanz zwischen einer gestoppten Position des Fahrzeugs und dem Kommunikationsendgerät (41) der Person, welche für einen Abruf verantwortlich ist, oder einem dazu entsprechenden Signal auf dem Kommunikationsendgerät (41) der Person aufweist, welche für einen Abruf verantwortlich ist.

## Revendications

1. Système de fonctionnement pour un véhicule électrique de mobilité personnelle (20), le système de fonctionnement comportant :
un serveur de fonctionnement (10) connecté à un système de communication (11) et comprenant une base de données cartographiques (15) qui comporte des liaisons définies pour des zones de circulation piétonnière comportant des trottoirs ; et
un véhicule (20) électrique de mobilité personnelle qui est adapté pour se connecter au serveur de fonctionnement (10) par le biais du système de communication (11), et qui présente un mode de conduite automatique pour se déplacer en suivant un itinéraire prédéterminé et un mode de conduite manuelle pour se déplacer sous le contrôle de l'utilisateur,
le serveur de fonctionnement (10) comprend :
une partie de génération d'itinéraire (13) qui génère une pluralité d'itinéraires de déplacement sur la base des données dans la base de données cartographiques (15), en réponse à une requête d'envoi provenant d'un terminal de communication utilisateur (41) connecté par le biais du système de communication (11), les itinéraires de déplacement comprennent un premier itinéraire de déplacement par conduite autonome à partir d'un emplacement actuel du véhicule jusqu'à un emplacement de prise en charge pour un utilisateur (40) associé au terminal de communication utilisateur (41), un deuxième itinéraire de déplacement par conduite pilotée à partir de l'emplacement de prise en charge pour l'utilisateur jusqu'à un emplacement de destination et un itinéraire de retour par conduite autonome à partir d'un emplacement de dépose pour l'utilisateur (40) jusqu'à une station de véhicule ; et
une partie de gestion de véhicule (12) qui surveille un emplacement et un état du véhicule (20) par le biais du système de communication (11), et
le serveur de fonctionnement (10) est configuré pour effectuer un téléchargement des itinéraires de déplacement sur le terminal de communication utilisateur (41) via le système de communication (11),
**caractérisé en ce que**
le serveur de fonctionnement présente une fonction qui avertit un opérateur (30) du serveur de fonctionnement (10) si la partie de gestion de véhicule (12) détecte que le véhicule (20) s'écarte de l'itinéraire ou ne se déplace pas pendant une durée prédéterminée au cours de la conduite autonome sur le premier itinéraire de déplacement ou l'itinéraire de retour, ou pendant la conduite pilotée sur le deuxième itinéraire de déplacement, et
le serveur de fonctionnement présente en outre une fonction d'aide à la récupération selon laquelle, en réponse à une requête de récupération par l'opérateur (30), la partie de génération d'itinéraire (13) sélectionne un point de récupération de véhicule qui minimise un total de coûts de déplacement définis pour chacune des liaisons de l'emplacement actuel du véhicule (20) au point de récupération de véhicule parmi des points de récupération de véhicule vers lesquels le véhicule (20) peut être déplacé à partir de l'emplacement actuel via télécommande par l'opérateur (30), et le serveur de fonctionnement (10) guide l'opérateur (30) sur un itinéraire jusqu'au point de récupération de véhicule généré par la partie de génération d'itinéraire (13).

2. Système de fonctionnement pour un véhicule électrique de mobilité personnelle (20) selon la revendication 1, dans lequel le serveur de fonctionnement (10) présente une fonction qui, en réponse à une requête de récupération par l'opérateur (30), notifie l'emplacement actuel du véhicule ou le point de récupération de véhicule par l'intermédiaire du système de communication (31) à un terminal de communication (41) d'une personne chargée de la récupération qui récupère le véhicule.

3. Système d'exploitation pour un véhicule électrique de mobilité personnelle (20) selon la revendication 2, dans lequel le serveur de fonctionnement (10) présente une fonction d'affichage qui amène, par l'intermédiaire du système de communication (31), une image de caméra ou une image environnante du véhicule à être affichée sur le terminal de communication (41) de la personne chargée de la récupération.

4. Système de fonctionnement pour un véhicule électrique de mobilité personnelle (20) selon la revendication 2, dans lequel le serveur de fonctionnement (10) présente une fonction pour afficher une distance relative entre un emplacement d'arrêt du véhicule et le terminal de communication (41) de la personne chargée de la récupération, ou un signal correspondant à celle-ci, sur le terminal de communication (41) de la personne chargée de la récupération.
